(19)

Europäisches
Patentamt
European
Patent Office
Office européen
des brevets

(11) **EP 2 854 393 A1**

(12) **EUROPEAN PATENT APPLICATION**
published in accordance with Art. 153(4) EPC

(43) Date of publication:
**01.04.2015 Bulletin 2015/14**

(21) Application number: **13817183.0**

(22) Date of filing: **10.07.2013**

(51) Int Cl.:
***H04N 7/00*** (2011.01)

(86) International application number:
**PCT/KR2013/006131**

(87) International publication number:
**WO 2014/010935 (16.01.2014 Gazette 2014/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.07.2012 US 201261670145 P**

(71) Applicant: **LG Electronics Inc.**
**Seoul 150-721 (KR)**

(72) Inventors:
• **JUNG, Jiwook**
**Seoul 137-724 (KR)**
• **YEA, Sehoon**
**Seoul 137-724 (KR)**

• **KOO, Moonmo**
**Seoul 137-724 (KR)**
• **HEO, Jin**
**Seoul 137-724 (KR)**
• **KIM, Taesup**
**Seoul 137-724 (KR)**
• **SUNG, Jaewon**
**Seoul 137-724 (KR)**
• **SON, Eunyong**
**Seoul 137-724 (KR)**

(74) Representative: **Diehl & Partner GbR**
**Patentanwälte**
**Erika-Mann-Strasse 9**
**80636 München (DE)**

(54) **METHOD AND APPARATUS FOR PROCESSING VIDEO SIGNAL**

(57) The present invention relates to a method and apparatus for processing a video signal, which involve acquiring the prediction value for the current texture block and performing an inter-view compensation on the prediction value for the current texture block using a first compensation coefficient and a second compensation coefficient. The first compensation coefficient is acquired using the neighboring pixel of the current texture block, the neighboring pixel of the reference block, and the first compensation coefficient. The method and apparatus for the present invention compensate for inter-view differences caused by imaging conditions, such as lighting or a camera, during the capture of multiview images so as to achieve improved accuracy in inter-view inter prediction.

FIG. 6

Start

Obtain inter-view motion vector — S600

Specify a location of a reference block using an inter-view motion vector, obtaining predicted value of current texture block using the reference block — S610

Obtaining a compensation coefficient using a neighbor pixel of the current texture block and a neighbor pixel of the reference block — S620

Compensate for predicted value using compensation coefficient — S630

Decode current texture block using compensated predicted value — S640

End

EP 2 854 393 A1

**Description**

## TECHNICAL FIELD

The present invention relates to a method and apparatus for coding a video signal.

## BACKGROUND ART

Compression coding means a series of signal processing techniques for transferring digitalized information via a communication circuit or storing digitalized information in a format suitable for a storage medium. Targets of compression coding include audio, video, text and the like. In particular, a technique of performing compression coding on video is called a video sequence compression. Multiview video sequence is generally characterized in having spatial redundancy, temporal redundancy and inter-view redundancy.

## DISCLOSURE OF THE INVENTION

## TECHNICAL TASK

The technical task of the present invention is to raise coding efficiency of a video signal.

## TECHNICAL SOLUTIONS

The present invention is characterized in raising accuracy of inter-view inter prediction by performing an inter-view compensation process on a predicted value of a current texture block.

The present invention can obtain a 1st correctional coefficient and a 2nd correctional coefficient for perform an inter-view compensation process using a neighbor pixel value of a current texture block and a neighbor pixel value of a reference block.

The present invention can determine whether to perform an inter-view compensation by comparing pixel value distribution differences of current and reference pictures to each other.

The present invention can determine whether to perform an inter-view compensation by comparing SADs and predetermined thresholds of pixel values of current and reference pictures to each other.

The present invention can determine whether to perform an inter-view compensation by comparing a normalized correlation value and a predetermined threshold to each other.

## ADVANTAGEOUS EFFECTS

The present invention is characterized in raising accuracy of inter-view inter prediction by compensating an inter-view difference generated under a photographing condition such as illumination, camera or the like in filming a multiview video.

The present invention can prevent coding performance degradation and complexity increase, which may be generated from an inter-view compensation process, by determining whether to perform the inter-view compensation process.

## DESCRIPTION OF DRAWINGS

FIG. 1 is a schematic block diagram of a video decoder according to one embodiment of the present invention.

FIG. 2 is a diagram for one example of a temporal inter prediction as a type of an inter prediction according to one embodiment of the present invention.

FIG. 3 is a diagram for one example of an inter-view inter prediction as a type of an inter prediction according to one embodiment of the present invention.

FIG. 4 is a diagram for one example of a current texture block, a reference block, a neighbor pixel of the current texture block, a neighbor pixel of the reference block, which are used during an inter-view difference compensating process, according to one embodiment of the present invention.

FIG. 5 is a diagram for one example of a histogram of a current picture and a histogram of a reference picture according to one embodiment of the present invention.

FIG. 6 is a flowchart of an inter-view compensation method according to one embodiment of the present invention.

FIG. 7 is a diagram for a method of obtaining an inter-view compensation flag according to one embodiment of the present invention.

## BEST MODE FOR INVENTION

The present invention relates to a video signal processing method and apparatus, including obtaining an inter-view motion vector, obtaining a reference block using the inter-view motion vector, the reference block located in a reference view, obtaining a predicted value of a current texture block using the reference block, obtaining a first compensation coefficient, obtaining a second compensation coefficient, inter-view compensating for a predicted value of the current texture block using the first compensation coefficient and the second compensation coefficient, and decoding the current texture block using a predicted value of the inter-view compensated current texture block, wherein the first compensation coefficient is obtained using a neighbor pixel of the current texture block and a neighbor pixel of the reference block and wherein the second compensation coefficient is obtained using the neighbor pixel of the current texture block, the neighbor pixel of the reference block and the $1^{st}$ compensation coefficient.

The present invention relates to a video signal processing method and apparatus, characterized in further including the steps of obtaining an inter-view compensation flag and determining a presence or non-presence of an inter-view compensation using the inter-view compensation flag.

The present invention relates to a video signal processing method and apparatus, characterized in that the inter-view compensation flag is obtained from a slice header.

The present invention relates to a video signal processing method and apparatus, characterized in that the inter-view compensation flag is obtained from one of a picture parameter set and a video parameter set.

The present invention relates to a video signal processing method and apparatus, characterized in that the inter-view compensation flag is obtained using a difference between a pixel value of a current picture having the current texture block included therein and a pixel value of a reference picture having the reference block included therein.

The present invention relates to a video signal processing method and apparatus, characterized in that the inter-view compensation flag is obtained by comparing a sum of absolute value for a difference between a pixel value of a current picture having the current texture block included therein and a pixel value of a reference picture having the reference block included therein to a predetermined threshold.

The present invention relates to a video signal processing method and apparatus, characterized in that the inter-view compensation flag is obtained from a neighbor block coded by an inter-view inter prediction of the current texture block.

The present invention relates to a video signal processing method and apparatus, characterized in that the neighbor block includes a spatial neighbor block and a temporal neighbor block.

## MODE FOR INVENTION

First of all, compression encoding or decoding of multiview video signal data considers spatial redundancy, temporal redundancy and inter-view redundancy. And, in case of a multiview video, it is able to code a multiview texture video taken in at least two views in order to implement a 3-dimensional video. Moreover, it may be able to further code depth data corresponding to the multiview texture video. In coding the depth data, it is a matter of course that compression coding can be performed in consideration of spatial redundancy, temporal redundancy or and inter-view redundancy. The depth data represents a distance information on a distance between a camera and a corresponding pixel. In the present specification, depth data can be flexibly interpreted as a depth-related information such as a depth information, a depth video, a depth picture, a depth sequence, a depth bitstream or the like. In the present specification, coding can include both concepts of encoding and decoding. And, coding can be flexibly interpreted to correspond to the technical idea and scope of the present invention.

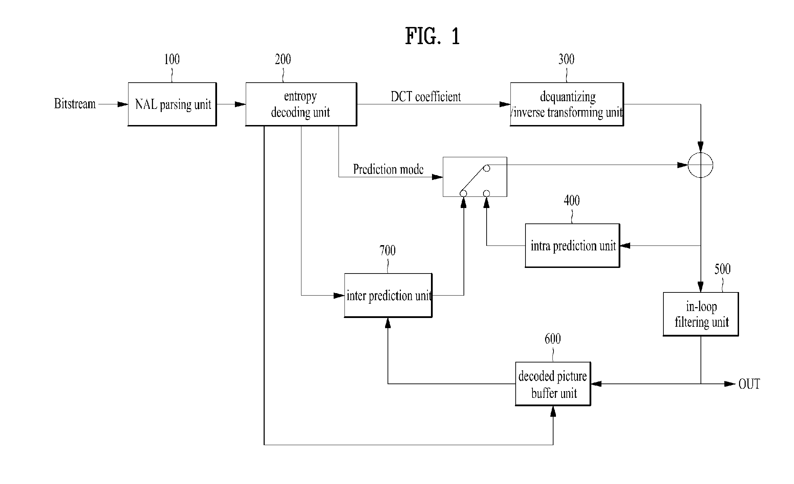

FIG. 1 is a schematic block diagram of a video decoder according to one embodiment of the present invention.

Referring to FIG. 1, a video decoder may include a NAL parsing unit 100, an entropy decoding unit 200, a dequantizing/inverse-transforming unit 300, an intra prediction unit 400, an in-loop filter unit 500, a decoded picture buffer unit 600, and an inter prediction unit 700. The NAL parsing unit 100 may receive a bitstream including multiview texture data. If depth data is required for coding of the texture data, the NAL parsing unit 100 may further receive a bitstream including an encoded depth data. In doing so, the inputted texture data and the inputted depth data may be transmitted as a single bitstream or a separate bitstream. The NAL parsing unit 100 may perform a parsing by NAL units to decode the inputted bitstream. If the inputted bitstream is a multiview related data (e.g., 3-Dimensional Video), the inputted bitstream may further include a camera parameter. The camera parameter may be categorized into an intrinsic camera parameter or an extrinsic camera parameter. The intrinsic camera parameter may contain a focal length, an aspect ratio, a principal point and the like. And, the extrinsic camera parameter may contain a location information of a camera in the world coordinate system and the like.

The entropy decoding unit 200 may extract a quantized transform coefficient, a coding information for prediction of a texture picture and the like through entropy decoding.

The dequantizing/inverse-transform unit 300 obtains a transform coefficient by applying a quantizing parameter to the quantized transform coefficient and is then able to decode texture data or depth data by inverse-transforming the transform coefficient. In this case, the decoded texture or depth data may include residual data according to a predictive processing. Moreover, a quantizing parameter for a depth block may be set in consideration of complexity of the texture data. For instance, if a texture block corresponding to a depth block is a high complexity region, a low quantizing parameter may be set. If a texture block corresponding to a depth block is a low complexity region, a high quantizing parameter may be set.

The intra prediction unit 400 may perform an intra-screen prediction using a reconstructed texture data in a current texture picture. Intra-screen prediction may be performed on a depth picture in the same manner of a texture picture. For instance, coding information used for an intra-screen prediction of a texture picture can be identically used for a depth picture. In this case, the coding information used for the intra-screen prediction may include an intra prediction mode and a partition information of intra prediction.

The in-loop filter unit 500 may apply an in-loop filter to each coded block to reduce a block distortion effect. A filter can improve an image quality of a decoded picture by smoothening an edge of a block. The filtered texture or depth pictures may be outputted or saved in the decoded picture buffer unit 600 to be used as a reference picture.

The decoded picture buffer unit 600 plays a role in storing or opening a previously coded texture or depth picture to perform an inter-screen prediction. In doing so, it is able to use frame_num and POC (picture order count) of each picture to open or save in the decoded picture buffer unit 600. Moreover, since depth pictures in views different from that of a current depth picture may exist among the previously coded pictures in depth coding, it may be able to use a view identification information for identifying a view of a depth picture in order to utilize the depth pictures in the different views as a reference picture. In the depth coding, depth pictures may be marked with a separate indication to be distinguished from texture pictures in the decoded picture buffer unit or information for identifying each depth picture may be used for the marking process.

The inter prediction unit 700 may perform a motion compensation of a current block using a reference picture and a motion information saved in the decoded picture buffer unit 600.

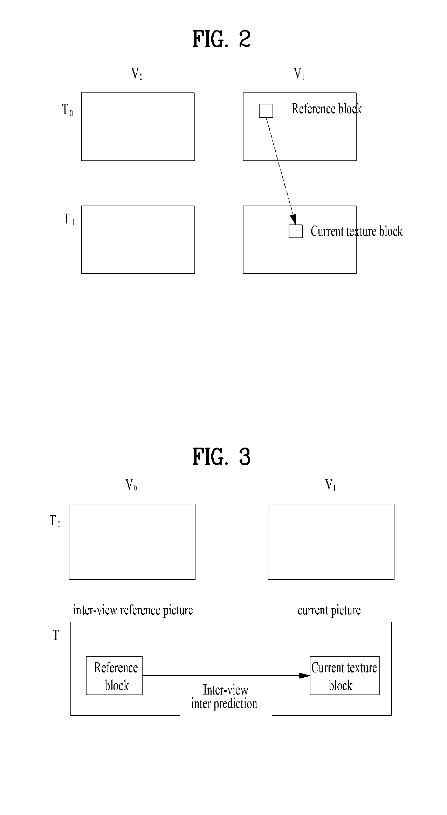

FIG. 2 is a diagram for one example of a temporal inter prediction as a type of an inter prediction according to one embodiment of the present invention.

Temporal inter prediction may mean an inter prediction using a reference picture located in the same view of a current texture block in a time slot different from the current texture block and a motion information of the current texture block.

In the present specification, for clarity and convenience of understanding, a temporal motion information can be flexibly interpreted as the concept that includes a temporal motion vector information and a temporal reference index information.

FIG. 3 is a diagram for one example of an inter-view inter prediction as a type of an inter prediction according to one embodiment of the present invention.

In case of a multi-view video taken through a plurality of cameras, inter-view inter prediction corresponding to an inter prediction between different views may be further performed as well as a temporal inter prediction.

Inter-view inter prediction may mean an inter prediction using a reference picture located in a view different from a current texture block and a motion information of the current texture block.

In the present specification, for clarity and convenience of understanding, an inter-view motion information used for an inter-view inter prediction can be flexibly interpreted as the concept that includes an inter-view motion vector information and an inter-view reference index information.

A method of determining whether a neighbor block is coded by an inter-view inter prediction is described as follows.

According to one embodiment of the present invention, whether a neighbor block is coded by an inter-view inter prediction may be determined based on whether the corresponding neighbor block uses an inter-view reference picture list. In this case, the inter-view reference picture list may mean a list configured with a reference picture located in a view different from that of the corresponding neighbor block. Alternatively, whether a neighbor block is coded by an inter-view inter prediction may be determined based on a reference index information of the corresponding neighbor block as well. For instance, if the reference index information of the corresponding neighbor block specifies a reference picture located in a view different from that of the corresponding neighbor block, it is able to specify that the corresponding neighbor block is coded by an inter-view inter prediction. Alternatively, whether a neighbor block is coded by an inter-view inter prediction may be determined based on whether a POC of a picture including the corresponding neighbor block is equal to a POC of a reference picture of the corresponding neighbor block. The POC is an output order information and pictures in the same access unit may have the same POC. Hence, if both of the POCs are equal to each other, it may mean that the picture including the neighbor block and the reference picture are located in different views, respectively. In this case, the corresponding neighbor block can be specified as coded by the inter-view inter prediction.

In case of an inter-view inter prediction corresponding to a prediction between different views, a reference block is discovered from a reference view corresponding to a view different from a current view and a pixel value of the reference block is used as a predicted value of a current texture block. When a coding by an inter-view inter prediction is performed, if a reference block in a reference view is used as a predicted value, since the accuracy of the inter-view inter prediction may be lowered depending on an inter-view difference due to such a filming condition for the filming of a multiview video as an illumination in each different view, a camera feature in each different view or the like, it is necessary to compensate for the difference. When an inter-view inter prediction is made, it is able to raise an accuracy of the inter-view inter prediction through a process for compensating for an inter-view difference.

A process for compensating for an inter-view difference is described as follows.

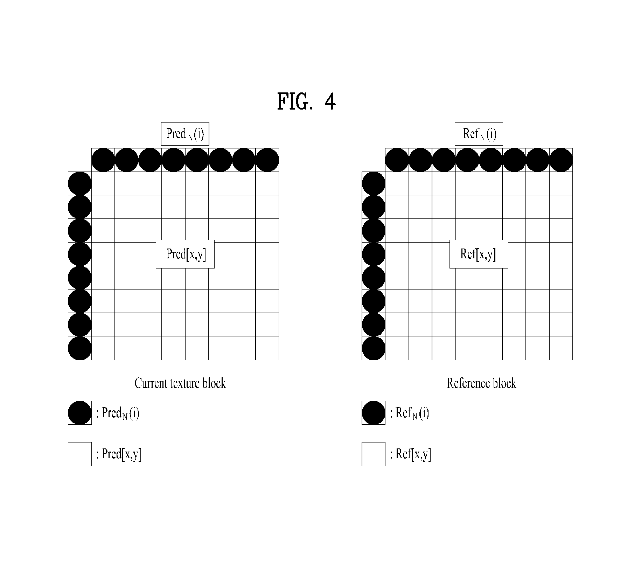

FIG. 4 is a diagram for one example of a current texture block, a reference block, a neighbor pixel of the current texture block, a neighbor pixel of the reference block, which are used during an inter-view difference compensating process, according to one embodiment of the present invention.

A current texture block may indicate a block intended to be currently coded. A reference block may indicate a block located in a view different from that of the current texture block at the same time of the current texture block. A neighbor pixel of the current texture block may indicate at least one of a left pixel of the current texture block and a right pixel of the current texture block. A neighbor pixel of a reference block may indicate at least one of a left pixel of the reference block and a right pixel of the reference block.

In case of decoding a current texture block, a pixel value of a reference block may be used as a predicted value of the current texture block. By reflecting a neighbor pixel value of the current texture block and a neighbor pixel value of the reference block in a different view, it is able to obtain a compensated predicted value of the current texture block from Formula 1.

[Formula 1]

$$Pred[x,y] = \alpha \times Ref[x,y] + \beta$$

In Formula 1, [x, y] means coordinates within a reference block and a current texture block. Ref[x, y] means a pixel value of the reference block and Pred[x, y] means a predicted value of the current texture block. A indicates a first compensation coefficient and β indicates a second compensation coefficient. The α and β may be obtained from a neighbor pixel of the current texture block and a neighbor pixel of the reference block. A method of obtaining the α and β may include a method of obtaining a solution of Formula 2 by Linear Least Square.

[Formula 2]

$$\alpha = \frac{I \times \sum_{i=0}^{I} Pred_N(i)\, Ref_N(i) - \sum_{i=1}^{I} Pred_{N(i)} \times \sum_{i=1}^{I} Ref_N(i)}{I \times \sum_{i=1}^{I} Ref_N(i) Ref_N(i) - \left(\sum_{i=1}^{I} Ref_N(i)\right)^2} = \frac{A_1}{A_2}$$

$$\beta = \frac{\sum_{i=1}^{I} Pred_N(i) - \alpha \sum_{i=1}^{I} Ref_N(i)}{I}$$

It is able to obtain α from Formula 2 using PredN(i) corresponding to a neighbor pixel value of a predicted value of a current texture block and RefN(i) corresponding to a neighbor pixel value of a pixel value of a reference block. It is able to obtain β from Formula 2 using the PredN(i) corresponding to the neighbor pixel value of the predicted value of the current texture block, the RefN(i) corresponding to the neighbor pixel value of the pixel value of the reference block, and the α. In Formula 2, 'i' means an index assigned to a neighbor pixel of the current texture block and neighbor pixels of the reference block. The PredN(i) means the neighbor pixel value of the current texture block and the RefN(i) means the neighbor pixel value of the reference block.

In case that a distribution difference in pixel value between inter-view pictures is not big, an inter-view compensation may bring a decrease of coding performance and an increase of complexity. Hence, it is able to prevent such degradations by defining an inter-view compensation flag indicating whether to perform an inter-view compensation with reference to a difference of pixel distribution between a currently coded picture and an inter-view reference picture.

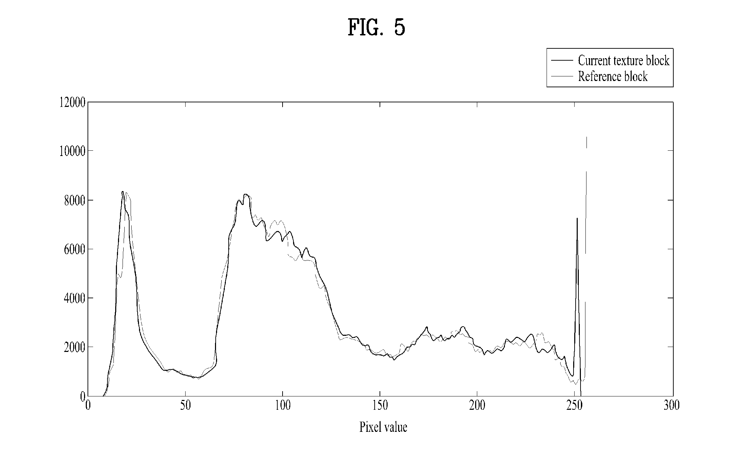

FIG. 5 is a diagram for one example of a histogram of a current picture and a histogram of a reference picture according to one embodiment of the present invention.

As one example of a method of calculating a distribution difference, there may be a method of using a histogram sum of absolute difference (SAD) of each of a current picture and a reference picture. The sum of absolute difference (SAD) indicates a sum of absolute values of differences of the respective pixels.

Histograms indicating distributions of pixel values of a current picture and a reference picture are created. The histogram indicates a count of appearance of a corresponding pixel value in each of the pictures.

A difference in each pixel value of the histogram of each of the current picture and the reference picture is found and absolute values of the differences are added together.

If a sum of absolute difference (SAD) of the histogram is equal to or greater than a predetermined threshold, an inter-view compensation flag is set to 1 to perform a compensation. If a sum of absolute difference (SAD) of the histogram is smaller than a predetermined threshold, an inter-view compensation flag is set to 0 not to perform a compensation.

Moreover, it may be able to use a method of determining whether to perform an inter-view compensation by comparing a normalized correlation value and a predetermined threshold to each other. It is able to obtain the normalized correlation value from dividing a cross-correlation value between pixels of a current picture and a reference picture by an auto-correlation value of the current picture. It is able to obtain the cross-correlation value from a sum of multiplications of the respective pixels of the reference picture and the current picture. And, it is able to obtain the auto-correlation value from a sum of multiplications of the pixels of the current picture.

If a normalized correlation value is equal to or greater than a predetermined threshold, an inter-view compensation flag is set to 1 to perform a compensation. If a normalized correlation value is smaller than a predetermined threshold, an inter-view compensation flag is set to 0 not to perform a compensation.

Moreover, it is able to obtain an inter-view compensation flag from a picture parameter set (PS) or a video parameter set (VPS). An encoder enables an inter-view compensation flag to be included in a picture parameter set or a video parameter set and then transmits the inter-view compensation flag included set to a decoder. In case that a current slice including a current texture block has an inter-view compensation flag information different from an upper level (e.g., a picture parameter set, a video parameter set, etc.), an inter-view compensation flag is included in a slice header and the inter-view compensation flag included slice header can be then transmitted to the decoder. Subsequently, the decoder may obtain the inter-view compensation flag from the picture parameter set or the video parameter set or may obtain the inter-view compensation flag from the slice header. If the inter-view compensation flag of the picture parameter set or the video parameter set is different from the inter-view compensation flag of the slice header, the decoder can perform a deciding using the inter-view compensation flag of the slice header.

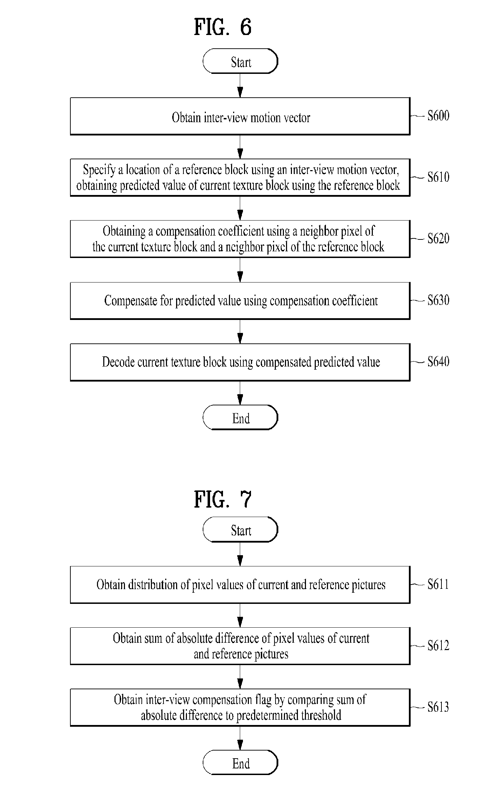

FIG. 6 is a flowchart of an inter-view compensation method according to one embodiment of the present invention.

It is able to obtain an inter-view motion vector for specifying a reference block [S600]. The inter-view motion vector may be defined as a vector indicating a reference block from a current texture block. The reference block maybe included in a reference view different from a view of the current texture block. The inter-view motion vector may be obtained from a spatial or temporal neighbor block of the current texture block.

A spatial neighbor block may include at least one of a left bottom neighbor block, a left neighbor block, a right top neighbor block, a top neighbor block, and a left top neighbor block of a current texture block. And, it is able to search for the inter-view motion vector in consideration of priorities among the spatial neighbor blocks. Hence, it is able to perform a spatial neighbor block search on order of the left neighbor block, the top neighbor block, the right top neighbor block, the left bottom neighbor block, and the left top neighbor block. For instance, in case of intending to derive the inter-view motion vector of the current texture block from neighbor blocks, if the left neighbor block is the block coded by an inter-view inter prediction, an inter-view motion vector of the left neighbor block is obtained as an inter-view motion vector of the current texture block and the corresponding search can be then ended. Yet, as a result of the search, if the left neighbor block is not coded by the inter-view inter prediction, it is able to check whether the top neighbor block is coded by the inter-view inter prediction. Alternatively, it is able to perform the search in order of the left bottom neighbor block, the left neighbor block, the right top neighbor block, the top neighbor block and the left top neighbor block until a block coded by the inter-view inter prediction is found. Yet, the priorities among the spatial neighbor blocks are non-limited by the above-described embodiment.

A temporal neighbor block may be defined as a block in a reference picture including a location corresponding to a location of a center pixel of a current texture block. In this case, the reference picture is a picture at a different time in the same view of a current picture including the current texture block. A temporal neighbor block of the present invention is non-limited by a co-located block and may mean a neighbor block adjacent to the co-located block. Meanwhile, it is able to search for a temporal neighbor block in consideration of the above-mentioned temporal neighbor block candidates (i.e., a) a co-located block, b) a neighbor block adjacent to a co-located block) and a priority.

Moreover, it is able to obtain an inter-view motion vector using a depth data corresponding to a current texture block. Using the depth data and a camera parameter, it is able to derive a variation vector of the current texture block [S520]. A detailed deriving method shall be described based on Formula 3 and Formula 4 as follows.

$$[\text{Formula 3}]$$

$$Z = \cfrac{1}{\cfrac{D}{255} \times (\cfrac{1}{Z_{near}} - \cfrac{1}{Z_{far}}) + \cfrac{1}{Z_{far}}}$$

Referring to Formula 3, the Z means a distance from a camera of a corresponding pixel. The D is a quantized value of the Z and corresponds to a depth data of the present invention. The Znear and Zfar mean a minimum value and a maximum value of the z defined for a view to which a depth picture belongs, respectively. Moreover, the Znear and Zfar may be extracted from a bitstream through a sequence parameter set, a slice header and the like or may be an information previously defined in a decoder. Hence, if the distance z from the camera of the corresponding pixel is quantized into 256 level, it is able to reconstruct the z using the depth data, the Znear and the Zfar like Formula 3. Subsequently, it is able to derive the variation vector for the current texture block using the reconstructed z like Formula 4.

$$[\text{Formula 4}]$$

$$d = \frac{f \times B}{2}$$

In Formula 4, the f means a focal distance of a camera and the B means a distance between cameras. It is able to assume that the f and B are identical for all cameras. Hence, the f and B may correspond to informations previously defined in the decoder.

It is able to specify a location of a reference block using an inter-view motion vector and it is able to obtain a predicted value of the current texture block using the reference block [S610]. A reference block indicated by the inter-view motion vector in the current texture block may be determined as a reference block. The reference block may be located at the same time in a view different from that of the current texture block. A pixel value of the reference block may be obtained as a predicted value of the current texture block. The predicted value of the current texture block obtained in the step S610 may be equal to the pixel value of the reference block.

Using a neighbor pixel of the current texture block and a neighbor pixel of the reference block, it is able to obtain a compensation coefficient [S620]. Using the current texture block, the reference block, the neighbor pixel of the current texture block, and the neighbor pixel of the reference block described with reference to FIG. 4, it is able to obtain the compensation coefficient for compensating for a predicted value of the current texture block. It is able to obtain the coefficient value using Formula 2. The compensation coefficient may include a first compensation coefficient and a second compensation coefficient. In the present specification, $\alpha$ may be defined as the first compensation coefficient and $\beta$ may be defined as the second compensation coefficient.

Using the compensation coefficient, it is able to compensate for the predicted value of the current texture block [S630]. It is able to compensate for the predicted value of the current texture block through Formula 1 using the compensation coefficient obtained in the step S620.

It is able to decode the current texture block using the compensated predicted value [S640]. It is able to further obtain a residual of the current texture block. And, it is able to decode the current texture block using the obtained residual and the compensated predicted value in the step S630.

Before the step S620 of obtaining the compensation coefficient using the neighbor pixel of the current texture block and the neighbor pixel of the reference block, it is able to add a step of obtaining an inter-view compensation flag. The inter-view compensation flag is the information indicating whether to perform an inter-view compensation step on the predicted value of the current texture block. For instance, if the inter-view compensation flag is set to 1, it is able to perform a step of obtaining the first compensation coefficient and the second compensation coefficient by performing the inter-view compensation step. If the inter-view compensation flag is set to 0, the inter-view compensation step may not be performed or the first compensation coefficient and the second compensation coefficient may be set to 1 and 0, respectively. In the following description, a method of obtaining an inter-view compensation flag is described.

FIG. 7 is a diagram for a method of obtaining an inter-view compensation flag according to one embodiment of the present invention.

Distribution of a pixel value of a current picture and a pixel value of a reference picture are obtained [S611]. The current picture means a picture having a current texture block included therein, and the reference picture means a picture having a reference block included therein. The distribution of the pixel value of the current picture and the pixel value of the reference picture can be represented as the histogram shown in FIG. 5. The distribution of the pixel value in the histogram can be represented as a count of the corresponding pixel value in the corresponding picture.

Absolute values of differences between the pixel values of the current and reference pictures are added together [S612]. Using the histogram obtained in the step S611, a difference between the count of the current picture and the count of the reference picture is obtained from each pixel value. By adding the absolute values of the differences in the respective pixel values together, a sum of absolute difference (SAD) is obtained.

By comparing the sum of absolute difference and a predetermined threshold to each other, an inter-view compensation flag is obtained [S613]. If the sum of absolute difference obtained in the step S612 is greater than the predetermined threshold, it indicates that a difference between the current picture and the reference picture is big. If the sum of absolute difference obtained in the step S612 is smaller than the predetermined threshold, it indicates that a difference between the current picture and the reference picture is small. If the sum of absolute difference is greater than the predetermined threshold, it is necessary to compensate for the difference between the current picture and the reference picture. Hence, it is able to set an inter-view compensation step to be performed by setting the inter-view compensation flag to 1. On the contrary, if the sum of absolute difference is smaller than the predetermined threshold, it is unnecessary to compensate for the difference between the current picture and the reference picture. Hence, it is able to set an inter-view compensation step not to be performed by setting the inter-view compensation flag to 0. Alternatively, by setting the inter-view compensation flag to 0, a first compensation coefficient and a second compensation coefficient may be set to 1 and 0, respectively.

In case of decoding a current texture block, it is able to derive an inter-view compensation flag using a method of transmitting an inter-view compensation flag, which is transmitted from an encoder, to a decoder or the inter-view compensation flag obtaining method in the decoder.

In case of a decoding device, an inter prediction unit obtains an inter-view motion vector, obtains a reference block using the inter-view motion vector, and obtains a predicted value of a current texture block using the reference block. In the inter prediction unit, a first compensation coefficient may be obtained using a neighbor pixel of the current texture block and a neighbor pixel of the reference block and a second compensation coefficient may be obtained using the neighbor pixel of the current texture block, the neighbor pixel of the reference block and the first compensation coefficient. In the inter prediction unit, an inter-view compensation is performed on the predicted value of the current texture block using the fist compensation coefficient and the second compensation coefficient and the current texture block may be decoded using the inter-view compensated predicted value of the current texture block.

Subsequently, the inter prediction unit obtains an inter-view compensation flag and is then able to determine whether to perform an inter-view compensation using the inter-view compensation flag.

As mentioned in the foregoing description, a decoding/encoding apparatus according to the present invention may be provided to a transmitter/receiver for multimedia broadcasting such as DMB (digital multimedia broadcast) to be used in decoding video and data signals and the like. And, the multimedia broadcast transmitter/receiver may include a mobile communication terminal.

A decoding/encoding method according to the present invention may be configured with a program for computer execution and then stored in a computer-readable recording medium. And, multimedia data having a data structure of the present invention can be stored in computer-readable recording medium. The computer-readable recording media include all kinds of storage devices for storing data that can be read by a computer system. The computer-readable recording media include ROM, RAM, CD-ROM, magnetic tapes, floppy discs, optical data storage devices, etc. and also include a device implemented with carrier waves (e.g., transmission via internet). And, a bit stream generated by the encoding method is stored in a computer-readable recording medium or transmitted via wire/wireless communication network.

## INDUSTRIAL APPLICABILITY

The present invention is applicable to coding a video signal.

## Claims

1. A method of processing a video signal, comprising the steps of;
obtaining an inter-view motion vector;

obtaining a reference block using the inter-view motion vector, the reference block located in a reference view;
obtaining a predicted value of a current texture block using the reference block; obtaining a first compensation coefficient;
obtaining a second compensation coefficient;
inter-view compensating for a predicted value of the current texture block using the first compensation coefficient and the second compensation coefficient; and
decoding the current texture block using a predicted value of the inter-view compensated current texture block,
wherein the first compensation coefficient is obtained using a neighbor pixel of the current texture block and a neighbor pixel of the reference block and
wherein the second compensation coefficient is obtained using the neighbor pixel of the current texture block, the neighbor pixel of the reference block and the 1st compensation coefficient.

2. The method of claim 1, further comprising the steps of:

obtaining an inter-view compensation flag; and
determining a presence or non-presence of an inter-view compensation using the inter-view compensation flag.

3. The method of claim 2, wherein the inter-view compensation flag is obtained from a slice header.

4. The method of claim 2, wherein the inter-view compensation flag is obtained from one of a picture parameter set and a video parameter set.

5. The method of claim 2, wherein the inter-view compensation flag is obtained using a difference between a pixel value of a current picture having the current texture block included therein and a pixel value of a reference picture having the reference block included therein.

6. The method of claim 2, wherein the inter-view compensation flag is obtained by comparing a sum of absolute value for a difference between a pixel value of a current picture having the current texture block included therein and a pixel value of a reference picture having the reference block included therein to a predetermined threshold.

7. The method of claim 1, wherein the inter-view compensation flag is obtained from a neighbor block coded by an inter-view inter prediction of the current texture block.

8. The method of claim 7, wherein the neighbor block includes a spatial neighbor block and a temporal neighbor block.

9. An apparatus for processing a video signal, comprising;
an inter prediction unit obtaining an inter-view motion vector;
the inter prediction unit obtaining a reference block using the inter-view motion vector, the reference block located in a reference view, obtaining a predicted value of a current texture block using the reference block, obtaining a first compensation coefficient; obtaining a second compensation coefficient, inter-view compensating for a predicted value of the current texture block using the first compensation coefficient and the second compensation coefficient and decoding the current texture block using a predicted value of the inter-view compensated current texture block, wherein the first compensation coefficient is obtained using a neighbor pixel of the current texture block and a neighbor pixel of the reference block and
wherein the second compensation coefficient is obtained using the neighbor pixel of the current texture block, the neighbor pixel of the reference block and the 1st compensation coefficient.

10. The apparatus of claim 9, further comprising:

the inter prediction unit obtaining an inter-view compensation flag and determining a presence or non-presence of an inter-view compensation using the inter-view compensation flag.

11. The apparatus of claim 10, wherein the inter-view compensation flag is obtained from a slice header.

12. The apparatus of claim 10, wherein the inter-view compensation flag is obtained from one of a picture parameter set and a video parameter set.

13. The apparatus of claim 10, wherein the inter-view compensation flag is obtained using a difference between a pixel value of a current picture having the current texture block included therein and a pixel value of a reference picture having the reference block included therein.

14. The apparatus of claim 10, wherein the inter-view compensation flag is obtained by comparing a sum of absolute value for a difference between a pixel value of a current picture having the current texture block included therein and a pixel value of a reference picture having the reference block included therein to a predetermined threshold.

15. The apparatus of claim 9, wherein the inter-view compensation flag is obtained from a neighbor block coded by an inter-view inter prediction of the current texture block and wherein the neighbor block includes a spatial neighbor block and a temporal neighbor block.

# FIG. 1

## FIG. 2

$V_0$        $V_1$

$T_0$

Reference block

$T_1$

Current texture block

## FIG. 3

$V_0$        $V_1$

$T_0$

$T_1$

inter-view reference picture      current picture

Reference block

Inter-view inter prediction

Current texture block

# FIG. 4

Pred$_N$(i)

Pred[x,y]

Current texture block

⬤ : Pred$_N$(i)

▢ : Pred[x,y]

Ref$_N$(i)

Ref[x,y]

Reference block

⬤ : Ref$_N$(i)

▢ : Ref[x,y]

# FIG. 5

EP 2 854 393 A1

# FIG. 6

Start

Obtain inter-view motion vector — S600

Specify a location of a reference block using an inter-view motion vector, obtaining predicted value of current texture block using the reference block — S610

Obtaining a compensation coefficient using a neighbor pixel of the current texture block and a neighbor pixel of the reference block — S620

Compensate for predicted value using compensation coefficient — S630

Decode current texture block using compensated predicted value — S640

End

# FIG. 7

Start

Obtain distribution of pixel values of current and reference pictures — S611

Obtain sum of absolute difference of pixel values of current and reference pictures — S612

Obtain inter-view compensation flag by comparing sum of absolute difference to predetermined threshold — S613

End

## INTERNATIONAL SEARCH REPORT

| International application No. |
| --- |
| **PCT/KR2013/006131** |

| A. CLASSIFICATION OF SUBJECT MATTER |
| --- |
| ***H04N 7/36(2006.01)i*** |
| According to International Patent Classification (IPC) or to both national classification and IPC |

| B. FIELDS SEARCHED |
| --- |
| Minimum documentation searched (classification system followed by classification symbols)<br>H04N 7/36; H04N 7/24; H04N 7/32 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: block, adjacent pixel, compensation, time and similar terms. |

| C. DOCUMENTS CONSIDERED TO BE RELEVANT | | |
| --- | --- | --- |
| Category* | Citation of document, with indication, where appropriate, of the relevant passages | Relevant to claim No. |
| X | KR 10-2011-0042705 A (SK TELECOM CO., LTD.) 27 April 2011<br>See abstract, paragraphs [0083], [0110] and [0111] and figures 5, 8. | 1-15 |
| A | KR 10-2005-0114751 A (UNIVERSITY-INDUSTRY COOPERATION GROUP OF KYUNG HEE UNIVERSITY et al.) 06 December 2005<br>See abstract, page 13 and figure 13. | 1-15 |
| A | KR 10-2011-0071047 A (LG ELECTRONICS INC.) 28 June 2011<br>See abstract, paragraphs [0042]-[0044] and figure 4. | 1-15 |
| A | KR 10-2011-0068897 A (ELECTRONICS AND TELECOMMUNICATIONS RESEARCH INSTITUTE) 22 June 2011<br>See paragraphs [0036]-[0092] and figure 1. | 1-15 |
| A | KR 10-2012-0026092 A (HUAWEI TECHNOLOGIES CO., LTD.) 16 March 2012<br>See paragraphs [0036]-[0045] and figure 2. | 1-15 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 OCTOBER 2013 (22.10.2013) | **23 OCTOBER 2013 (23.10.2013)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

International application No.

**PCT/KR2013/006131**

| Patent document cited in search report | Publication date | Patent family member | Publication date |
|---|---|---|---|
| KR 10-2011-0042705 A | 27/04/2011 | KR 10-2011-0033511 A<br>US 2013-0022118 A1<br>WO 2011-037420 A2<br>WO 2011-037420 A3 | 31/03/2011<br>24/01/2013<br>31/03/2011<br>04/08/2011 |
| KR 10-2005-0114751 A | 06/12/2005 | CN 1705375 A<br>US 2006-0002466 A1 | 07/12/2005<br>05/01/2006 |
| KR 10-2011-0071047 A | 28/06/2011 | CN 102763418 A<br>EP 2515542 A2<br>WO 2011-074874 A2<br>WO 2011-074874 A3 | 31/10/2012<br>24/10/2012<br>23/06/2011<br>20/10/2011 |
| KR 10-2011-0068897 A | 22/06/2011 | CN 102656887 A<br>EP 2515538 A2<br>JP 2013-514714 A<br>KR 10-2011-0068792 A<br>KR 10-2012-0090898 A<br>KR 10-2012-0139642 A<br>KR 10-2013-0090863 A<br>KR 10-2013-0090864 A<br>KR 10-2013-0092524 A<br>KR 10-2013-0092525 A<br>KR 10-2013-0093052 A<br>KR 10-2013-0093053 A<br>US 2012-0263229 A1<br>WO 2011-074896 A2<br>WO 2011-074896 A3 | 05/09/2012<br>24/10/2012<br>25/04/2013<br>22/06/2011<br>17/08/2012<br>27/12/2012<br>14/08/2013<br>14/08/2013<br>20/08/2013<br>20/08/2013<br>21/08/2013<br>21/08/2013<br>18/10/2012<br>23/06/2011<br>17/11/2011 |
| KR 10-2012-0026092 A | 16/03/2012 | CN 101931803 A<br>CN 101931803 B<br>CN 102883160 A<br>EP 2448266 A1<br>US 2012-0106645 A1<br>WO 2010-148919 A1 | 29/12/2010<br>09/01/2013<br>16/01/2013<br>02/05/2012<br>03/05/2012<br>29/12/2010 |

Form PCT/ISA/210 (patent family annex) (July 2009)